**Europäisches Patentamt**

**European Patent Office**

**Office européen des brevets**

(19)

(11) Veröffentlichungsnummer: **0 110 815**
A2

(12) # EUROPÄISCHE PATENTANMELDUNG

(21) Anmeldenummer: 83730108.4

(22) Anmeldetag: 11.11.83

(51) Int. Cl.³: **B 23 Q 7/00,** B 23 Q 7/14, B 23 Q 3/155

(30) Priorität: 19.11.82 DE 3243335
04.02.83 DE 3304285

(43) Veröffentlichungstag der Anmeldung: 13.06.84
Patentblatt 84/24

(84) Benannte Vertragsstaaten: CH DE FR GB IT LI

(71) Anmelder: Deutsche Industrieanlagen Gesellschaft mbH, Fritz-Werner-Strasse, D-1000 Berlin 48 (DE)

(72) Erfinder: Genschow, Henning, Prof. Dr.-Ing., Zehntstrasse 8, D-3387 Vienenburg 4 (DE)
Erfinder: Heisel, Uwe, Dr.-Ing., Blücherstrasse 15, D-1000 Berlin 45 (DE)
Erfinder: Schuster, Joachim, Dipl.-Ing., Goltzstrasse 19, D-1000 Berlin 49 (DE)

(74) Vertreter: Jander, Dieter, Dipl.-Ing. et al, Dipl.-Ing. Dieter Jander Dr.-Ing. Manfred Böning Patentanwälte Kurfürstendamm 66, D-1000 Berlin 15 (DE)

(54) **Flexible Fertigungszelle.**

(57) Die Erfindung bezieht sich auf eine flexible Fertigungszelle mit mindestens zwei Werkzeugmaschinen (1, 2) und einer in rechtwinkligen Koordinaten bewegbaren Transporteinrichtung (9) mit Aufnahmen für die von Trägern (8) gehaltenen Werkstücke und für die Werkzeuge (6). Die Erfindung besteht darin, dass die Transporteinrichtung (9) numerisch gesteuert ist, dass die Werkzeuge (6) zwischen einer Werkzeugablage (29) und den Werkzeugmaschinen (1, 2) einzeln transportierbar sind und dass werkzeugmaschinenintegrierte Werkzeugmagazine (5) vorgesehen sind, die auch während der Arbeitszeit der Werkzeugmaschinen (1, 2) für den Werkzeugaustausch zugänglich sind. Auf diese Weise ist eine schnelle, taktfreie und wahlfreie Arbeitsweise möglich.

EP 0 110 815 A2

# Flexible Fertigungszelle

Die Erfindung bezieht sich auf eine flexible Fertigungszelle mit mindestens zwei Werkzeugmaschinen und einer in rechtwinkligen Koordinaten bewegbaren Transporteinrichtung mit Aufnahmen für die von Trägern gehaltenen Werkstücke und für die Werkzeuge.

Bei einer bekannten Zelle dieser Art (AT-PS 288 112) ist über die Steuerung der Transporteinrichtung nichts zum Ausdruck gebracht. Die Werkzeuge werden zwischen einer Werkzeugablage und den Werkzeugmaschinen auf Paletten satzweise transportiert. Jede Werkzeugmaschine hat ein Magazin für mehrere Paletten. Die Werkzeuge sind nicht während der Arbeitszeit der Maschinen für den Werkzeugaustausch zugänglich.

Der Erfindung liegt die Aufgabe zugrunde, die eingangs erwähnte Zelle derart auszubilden, daß mit ihr eine optimale Fertigung möglich ist.

Diese Aufgabe wird erfindungsgemäß dadurch gelöst, daß die Transporteinrichtung numerisch gesteuert ist, daß die Werkzeuge zwischen einer Werkzeugablage und den Werkzeugmaschinen einzeln transportierbar sind und daß werkzeugmaschinenintegrierte Werkzeugmagazine vorgesehen sind, die auch während der Arbeitszeit der Werkzeugmaschinen für den Werkzeugaustausch zugänglich sind.

Auf diese Weise ist es im Gegensatz zu der bekannten Zelle möglich, taktfrei und wahlfrei zu fertigen. Außerdem können die Rüstzeiten gegenüber den Rüstzeiten, die für die bekannte Zelle erforderlich sind, erheblich reduziert werden.

Gegenüber den Fertigungszellen mit in Polarkoordinaten arbeitenden Transporteinrichtungen besteht der Vorteil einer günstigeren Raumaufteilung und einer einfacheren Steuerung.

Besonders zweckmäßig ist es, wenn die Transporteinrichtung in Kreuzportalbauweise ausgebildet ist, weil dann der Raum unterhalb der Transporteinrichtung für andere Zwecke zur Verfügung steht.

Zweckmäßig ist es aber auch, wenn die Transporteinrichtung aus einer hinter den Werkzeugmaschinen befindlichen Transporteinrichtung in Kreuzportalbauweise oder in Form eines Wagens mit einer Greifeinrichtung für die Werkzeuge und aus einem vor den Werkzeugmaschinen hin und her fahrbaren Wagen mit einer Greifeinrichtung für die Werkstückträger besteht, denn dann können auch schwere Werkstückträger mit und ohne schweren Werkstücken transportiert werden.

Günstige Raumaufteilungen liegen dann vor, wenn zwei gleiche oder gleichgeartete Werkzeugmaschinen nebeneinanderstehen und die Ein/Ausgabestationen, Zulieferstationen und Ablagen sich zwischen und/oder seitlich zwischen ihnen befinden.

Weitere Einzelheiten der Erfindung ergeben sich aus der Zeichnung. Darin zeigen:

Fig.    1 eine perspektivische Darstellung einer ersten Ausführungsform der erfindungsgemäßen Fertigungszelle;

Fig. 2-5 perspektivische Darstellungen von dazu passenden Werkstückträgern;

Fig. 6 eine perspektivische Darstellung einer
zweiten Ausführungsform der erfindungsgemäßen Fertigungszelle und

Fig. 7 einen Werkzeugträger.

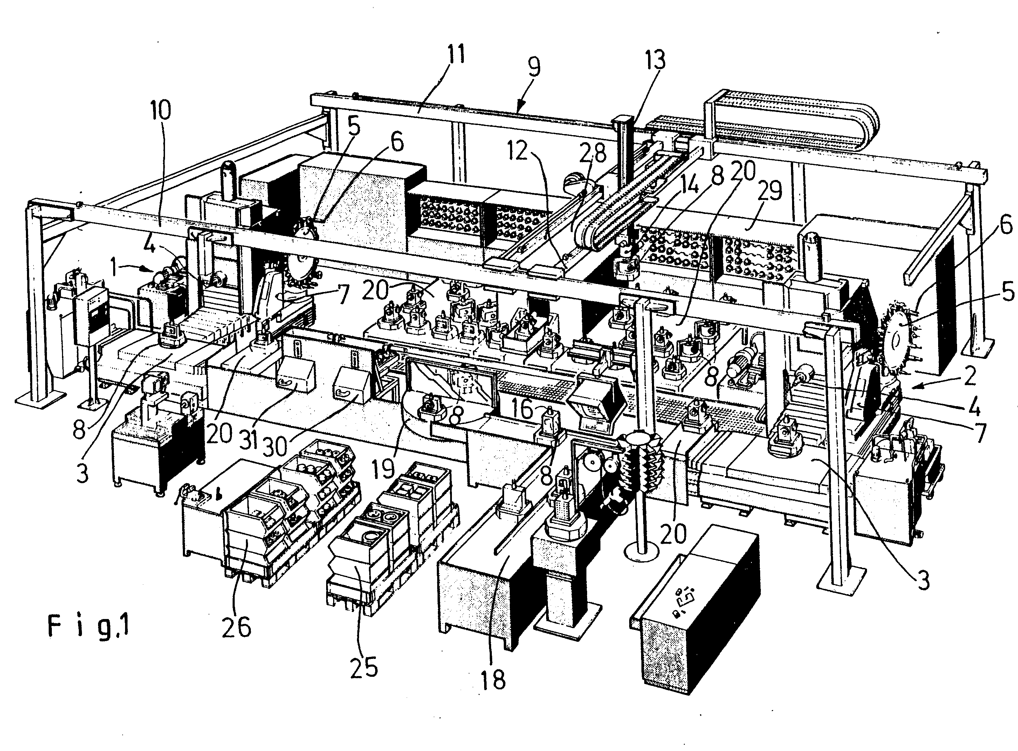

In Fig. 1 sind mit 1 und 2 allgemein zwei als Bearbeitungszentren ausgebildete Werkzeugmaschinen bezeichnet. Zu jeder Werzeugmaschine gehören ein Tisch
3, eine Arbeitsspindel 4, ein Werkzeugmagazin 5 mit
Werkzeugen 6 und ein Werkzeugwechsler 7. Zum Beschikken der Tische 3 der Werkzeugmaschinen 1 und 2 mit
Werkstücke tragenden Werkstückträgern 8 und zum Beschicken der Werkzeugmagazine 5 mit Werkzeugen 6
dient eine allgemein mit 9 bezeichnete Transporteinrichtung. Diese ist in Kreuzportalbauweise ausgeführt.
Sie besitzt zwei Längsträger 10 und 11 und einen verfahrbar an diesen geführten Querträger 12. Am Querträger 12 ist vertikal verfahrbar ein säulenförmiger Halter 13 für einen Greifer 14 gelagert. Der Greifer 14
kann an den Werkzeugen 6 und den Werkstückträgern 8
angeordnete Adapter 16 erfassen. Gleiche Adapter lassen sich auch an von dem Greifer 14 transportierbaren
Meß- und Hilfszeugen anbringen.

Die Werkstückträger 8 sind an ihrer Unterseite mit Kugelrollen versehen, die eine bequeme Verfahrbarkeit in
allen Richtungen gestatten. Sie werden auf einem Rüstplatz 18 mit zur Aufnahme von Werkstücken dienenden
nicht dargestellten Fixier- und Spannorganen versehen,
anschließend zu einer Ein- und Ausgabestation 19 überführt, wo sie mit Werkstücken bestückt werden. Von hier
aus gelangen sie zu Speicherstationen darstellenden
Werkstückträger-Abalgen 20.

Zur Lagerung der unbearbeiteten Werkstücke dienen Behälter 25, zur Lagerung der Fertigteile Behälter 26.

An der der Ein- und Ausgabestation 19 gegenüberliegenden Seite der Fertigungszelle sind eine Waschstation 28 und Abalgen 29 für Werkzeuge 6 und Meß- und Hilfszeuge vorgesehen. Mit 30 ist eine Werkzeugausgabe und mit 31 eine Werkzeugeingabe bezeichnet.

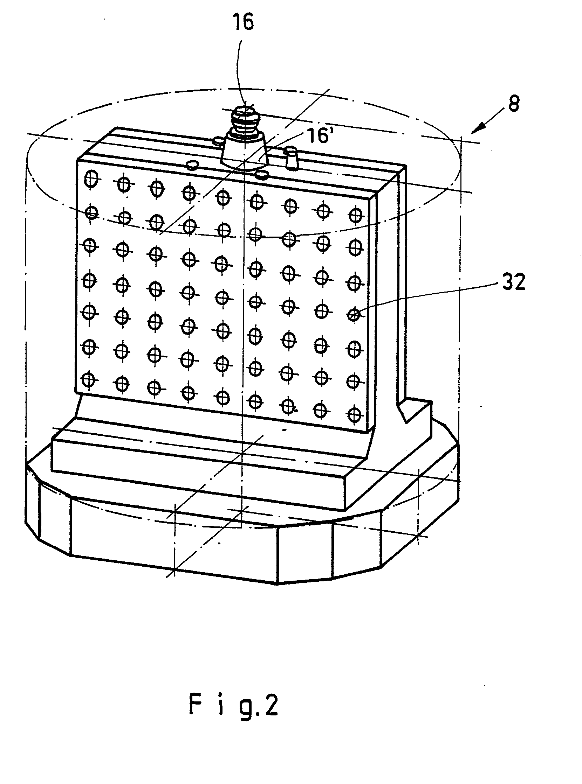

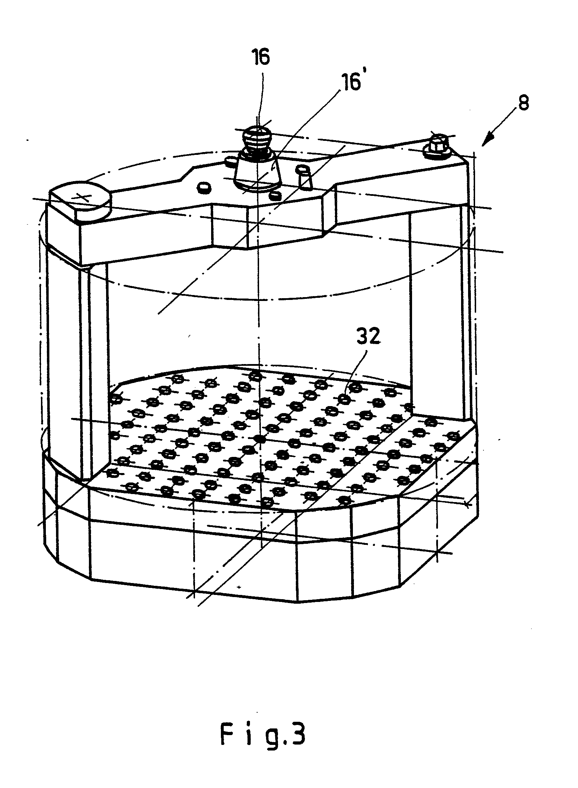

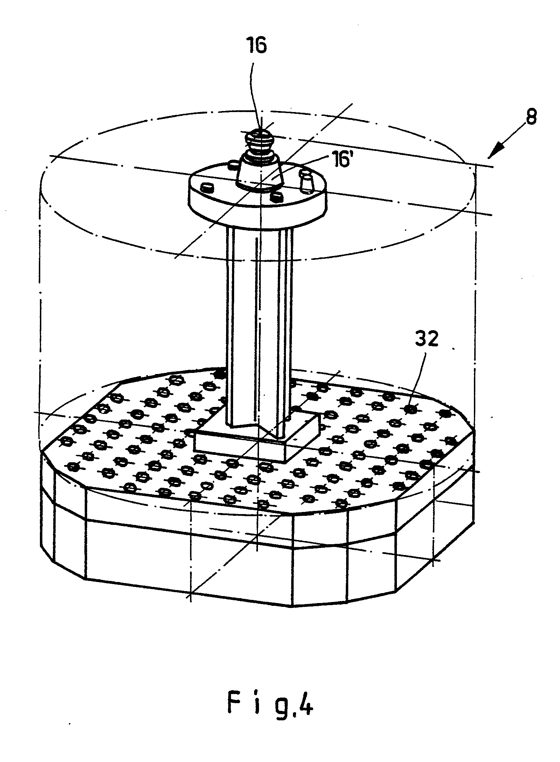

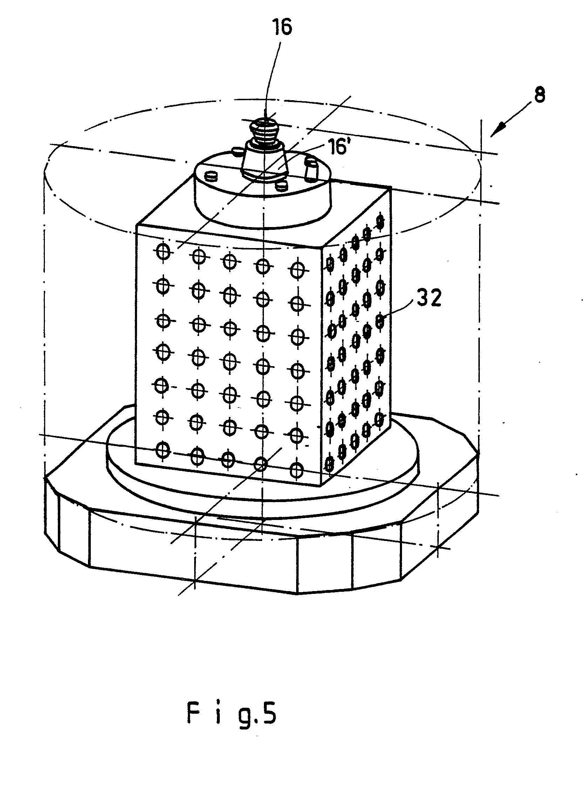

Einzelheiten der Werkstückträger 8 ergeben sich aus den Fig. 2 - 5. Sie sind mit Rastern von Befestigungsbohrungen 32 versehen, über die die Werkstücke an den Werkstückträgern befestigt werden können. Ferner weisen sie gleiche Adapter 16 auf, über die sie von dem Greifer 14 der Transporteinrichtung erfaßt werden können. Die Adapter besitzen einen konischen Bereich 16', der das Einfangen des Adapters 16 durch den Greifer und anschließendes Zentrieren erleichtert.

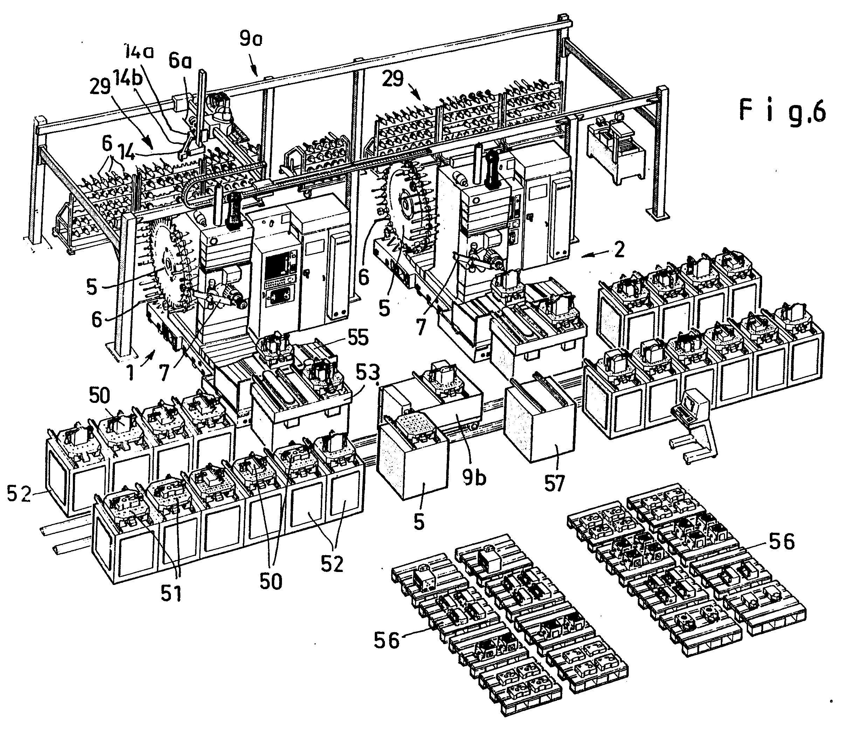

Fig. 6 zeigt eine andere Ausführungsform einer erfindungsgemäßen Zelle. Bei ihr stehen im Unterschied zur Ausführungsform der Fig. 1 die Bearbeitungszentren 1 und 2 näher zusammen. Die Transporteinrichtung ist in zwei Transporteinrichtungen aufgeteilt, nämlich in eine solche in Kreuzportalbauweise 9a für die Werkzeuge 6 und in eine solche in Form eines vor den Zentren 1,2 verfahrbaren Wagens 9b für die Werkstücke 50, die an Werkstückträgern 51 festgespannt sind. Längs der Fahrstrecke des Wagens 9b befinden sich Ablagen 52 für die mit Werkstücken 50 bestückten Werkstückträger 51. Mit 53 ist eine Einrichtung zum Wechseln der mit Werkstücken bestückten Werkstückträger 51 bezeichnet. Diese Einrichtung 53 ist mit zwei Schleppketten 54 bestückt (von denen nur die eine sichtbar ist). Eine ähnliche Schleppkette befindet sich auch auf dem Wagen 9b. Mit 55 ist ein Ma-

- 5 -                                          0110815

schinentisch, mit 56 Holzpaletten zur Ablage der rohen Werkstücke und der bearbeiteten Werkstücke und mit 57 ein Rüstplatz bezeichnet.

Die Handhabung der Werkstücke 50 erfolgt folgendermaßen: Zunächst werden die Werkstücke auf dem Rüstplatz 57 an den Werkstückträgern 51 festgespannt. Die mit Werkstücken bestückten Werkstückträger 51 werden dann von dem Wagen 9b abgeholt, der sie mittels seiner Schleppkette auf sich zieht. Die mit Werkstücken bestückten Werkstückträger 51 werden dann von dem Wagen zu einer Ablage 52 transportiert und mittels der auf dem Wagen 9b befindlichen Schleppkette auf die Ablage 52 geschoben. Der Wagen 9b holt sich von einer Ablage 52 einen mit einem Werkstück bestückten Werkstückträger und transportiert ihn vor die Wechseleinrichtung 53. Diese übernimmt den mit einem Werkstück bestückten Werkstückträger 51 und schiebt ihn auf den Maschinentisch 55. Das Werkstück 50 wird nun bearbeitet. In ähnlicher Weise kann das bearbeitete Werkstück in umgekehrter Richtung transportiert werden, wobei es allerdings in der Regel nicht eine Ablage 52 durchläuft, sondern sofort auf den Rüstplatz 57 gelangt und von dort auf eine Palette 56. Lediglich, wenn der Rüstplatz 57 einmal belegt sein sollte, legt der Wagen 9b das Werkstück zunächst auf eine Ablage 52 ab. Der Transport der Werkstücke von dem Rüstplatz 57 auf die Paletten 56 und umgekehrt erfolgt mittels eines nicht dargestellten Krans.

Wie in Fig. 1 sind auch in Fig. 6 mit 5 Werkzeugmagazine, mit 7 Werkzeugwechsler, mit 29 eine Werkzeugablage und mit 14 ein Greifer bezeichnet. Der Greifer 14 weist einen Arm 14a auf, der um eine Achse 14b schwenkbar ist. Ein von ihm ergriffenes Werkzeug 6a aus der Werkzeugablage 29 kann auf diese Weise in eine Lage geschwenkt werden, in der es parallel zu den im Magazin 5 befindlichen Werkzeugen ist, so daß es in dieses hineingegeben werden kann.

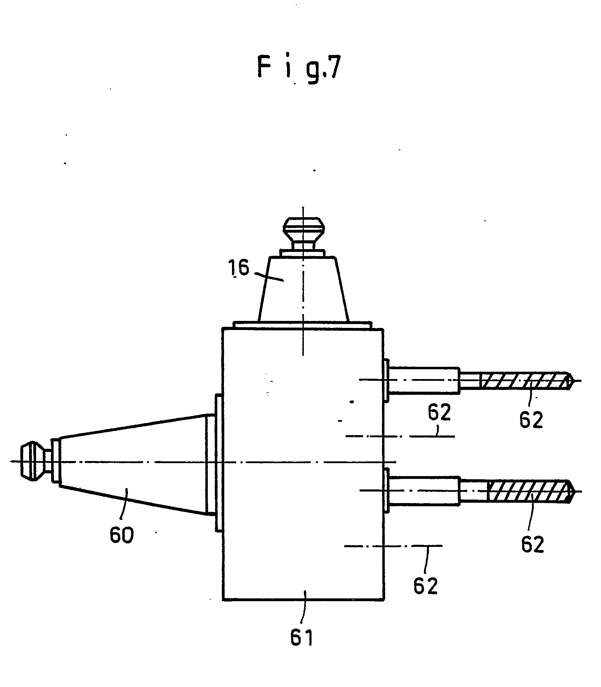

Fig. 7 zeigt einen Werkzeugträger. Dieser besteht aus einem drehbaren Adapter 60, der in eine Arbeitsaufnahme einer Werkzeugmaschine einsteckbar ist, einem Tragkörper 61, in dem sich ein Verzweigungsgetriebe und/oder eine Spindellagerung befindet, Werkzeugen 62 und einem weiteren Adapter 16, der von dem Greifer 14 der Zelle gemäß Fig. 1 ergriffen werden kann und fest an dem Tragkörper 61 sitzt.

Als Werkzeugträger kommen in Frage: Mehrspindelköpfe, Planschieber, Ausdrehköpfe, Bohrbrücken, Winkelköpfe, Sonderdrehköpfe oder Sonderfräs- und Bohrköpfe.

- 7 -

0110815

Patentansprüche

1. Flexible Fertigungszelle mit mindestens zwei Werkzeugmaschinen (1,2) und einer in rechtwinkligen Koordinaten bewegbaren Transporteinrichtung (9;9a,9b) mit Aufnahmen für die von Trägern (8,51) gehaltenen Werkstücke (50) und für die Werkzeuge (6), dadurch gekennzeichnet, daß die Transporteinrichtung (9;9a,9b) numerisch gesteuert ist, daß die Werkzeuge (6) zwischen einer Werkzeugablage (29) und den Werkzeugmaschinen (1,2) einzeln transportierbar sind und daß werkzeugmaschinenintegrierte Werkzeugmagazine (5) vorgesehen sind, die auch während der Arbeitszeit der Werkzeugmaschinen (1,2) für den Werkzeugaustausch zugänglich sind.

2. Fertigungszelle nach Anspruch 1, dadurch gekennzeichnet, daß die Transporteinrichtung (9) in Kreuzportalbauweise ausgebildet ist.

3. Fertigungszelle nach Anspruch 1 oder 2, dadurch gekennzeichnet, daß die Transporteinrichtung (9) eine einzige Greifeinrichtung (14) für die Träger (8) und die Werkzeuge (6) aufweist.

4. Fertigungszelle nach Anspruch 1, dadurch gekennzeichnet, daß die Transporteinrichtung aus einer hinter den Werkzeugmaschinen (1,2) befindlichen, mit einer Greifeinrichtung (14) für die Werkzeuge (6) ausgerüsteten Transporteinrichtung (9a) in Kreuzportalbauweise oder in Form eines Wagens und aus einem vor den Werkzeugmaschinen (1,2) hin und her fahrbaren Wagen (9b) mit einer Greifeinrichtung für die Werkstückträger (51) besteht.

5. Fertigungszelle nach einem der Ansprüche 1 bis 4, dadurch gekennzeichnet, daß zwei gleiche oder gleichgeartete Werkzeugmaschinen (1,2) nebeneinanderstehen und daß die Ein/Ausgabestationen, Zulieferstationen und Ablagen sich zwischen und/oder seitlich zwischen bzw. neben ihnen befinden.

6. Fertigungszelle nach einem der Ansprüche 1 bis 3, dadurch gekennzeichnet, daß Adapter (16) der Werkstückträger (8) und Adapter der Werkzeuge (6) zum Ergreifen der Träger (8) und der Werkzeuge (6) untereinander gleich oder gleichartig ausgebildet sind.

7. Fertigungszelle nach Anspruch 3, dadurch gekennzeichnet, daß die Greifeinrichtung (14) eine nach unten offene Aufnahme für die Adapter der Werkstückträger (8) und eine zur Seite hin offene Aufnahme für die Adapter der Werkzeuge (6) aufweist.

8. Fertigungszelle nach einem der Ansprüche 1 bis 7, dadurch gekennzeichnet, daß im mittleren Bereich der Längsbewegungsbahn der Transporteinrichtung (9;9a,9b) eine Ein- und Ausgabestation (19,57) für die mit Werkstücken bestückten Werkstückträger (8,51) vorgesehen ist.

9. Fertigungszelle nach Anspruch 8, dadurch gekennzeichnet, daß auf der der Station (19,57) gegenüberliegenden Seite der Fertigungszelle innerhalb des Bewegungsraumes der Transporteinrichtung (9;9a,9b) eine Werkzeugablage (29) angeordnet ist, in der vorzugsweise die Werkzeuge (6) horizontal abgelegt sind.

10. Fertigungszelle nach einem der Ansprüche 1 bis 9, dadurch gekennzeichnet, daß die Werkstückträger (8) an ihrer Unterseite mit Kugelrollen versehen sind.

11. Fertigungszelle nach einem der Ansprüche 3 bis 10, dadurch gekennzeichnet, daß die Greifeinrichtung (14) für die Werkzeuge (6) mehrere Aufnahmen für die Adapter der Werkzeuge (6) besitzt.

12. Fertigungszelle nach einem der Ansprüche 3 bis 11, dadurch gekennzeichnet, daß die Greifeinrichtung (14) um eine Achse oder um zwei zueinander senkrecht stehende Achsen bewegbar ist.

13. Fertigungszelle nach einem der Ansprüche 1 bis 12, dadurch gekennzeichnet, daß bei Verwendung eines Werkzeugträgers (60,61) mit einem Adapter (60), der in eine Arbeitsaufnahme einer Werkzeugmaschine (1,2) einsteckbar ist, dieser Werkzeugträger (60,61) einen weiteren Adapter (16) aufweist, über den er von der Greifeinrichtung (14) der Transporteinrichtung (9) ergriffen werden kann.

14. Fertigungszelle nach Anspruch 13, dadurch gekennzeichnet, daß der weitere Adapter (16) von der nach unten offenen Aufnahme der Greifeinrichtung (14) ergriffen werden kann.

15. Fertigungszelle nach Anspruch 13 oder 14, dadurch gekennzeichnet, daß der weitere Adapter (16) an einem Träger (61) des Werkstückträgers (60,61) sitzt.

16. Fertigungszelle nach Anspruch 4, dadurch gekennzeichnet, daß die Greifeinrichtung des Wagens (9b) aus einer endlosen Schleppkette besteht, mittels derer die Werkstückträger (51) auf den Wagen (9b) gezogen und von diesem geschoben werden können.

17. Fertigungszelle nach Anspruch 4, dadurch gekennzeichnet, daß seitlich neben der Bahn des Wagens (9b) Ablagen (52) für die Werkstückträger (51) und mindestens ein Rüstplatz (57) zum Auf- und Abspannen der Werkstücke (50) vorgesehen sind.

18. Fertigungszelle nach Anspruch 17, dadurch gekennzeichnet, daß sich zwischen einem Maschinentisch (55), auf dem sich die Werkstücke (50) befinden, wenn sie bearbeitet werden, und dem vor dem Maschinentisch (55) stehenden Wagen (9b) eine Vorrichtung (53) mit zwei Werkstückträger-Aufnahmen befindet, die einen Wechsel eines ersten Werkstückes (50) vom Wagen (9b) auf den Maschinentisch (55) und eines zweiten Werkstückes (50) vom Maschinentisch (55) auf den Wagen (9b) gestattet.

19. Fertigungszelle nach Anspruch 18, dadurch gekennzeichnet, daß jede Aufnahme mit einer Schleppkette (54) versehen ist, die den Transport eines Werkstückträgers (51) auf die Vorrichtung (53) und von dieser ermöglicht.

20. Fertigungszelle nach einem der Ansprüche 1 bis 19, dadurch gekennzeichnet, daß die Werkzeugmagazine (5) kreisförmige Träger sind, die an ihren Rändern die Werkzeuge (6) tragen, und daß die Drehachsen der Träger (5) horizontal und senkrecht zu den Drehachsen der Arbeitsspindeln der Werkzeugmaschinen (1,2) verlaufen.

21. Fertigungszelle nach Ansprüchen 4 und 20, dadurch gekennzeichnet, daß bei Vorsehung einer Transporteinrichtung (9a) in Kreuzportalbauweise für die Werkzeuge (6) die Greifeinrichtung (14) einen Arm (14a) aufweist, der um eine Achse (14b) schwenkbar ist, die in einem Winkel von 45° zur Drehachse der Magazine (5) bzw. zur Lage der abgelegten Werkzeuge (6) orientiert ist, und daß ein Greifer für die Werkzeuge (6) an dem Arm sitzt.

Fig.1

Fig.2

Fig.3

16

16'

8

32

Fig.4

Fig.5

Fig.6

0110815

Fig.7